# EUROPEAN PATENT APPLICATION

(11) **EP 2 141 014 A1**
(43) Date of publication of application: **06.01.2010**
(21) Application number: 08752021.9
(22) Date of filing: 24.04.2008
(51) Int. Cl.: B32B 15/092, B32B 9/00, B32B 15/08, C09J 5/02, C09J 11/04, C09J 11/08, C09J 163/00, C23F 1/28

(54) **STAINLESS STEEL COMPLEX AND ITS MANUFACTURING METHOD**

(30) Priority: 24.04.2007 JP 2007114576
(71) Applicant: Taisei Plas Co., Ltd., Tokyo 103-0007 (JP)
(72) Inventor: NARITOMI, Masanori, Tokyo 103-0023 (JP); ANDO, Naoki, Tokyo 103-0023 (JP)
(74) Representative: TER MEER - STEINMEISTER & PARTNER GbR
(86) International application number: PCT/JP2008/057922
(87) International publication number: WO 2008/133296

(57) **Abstract**

An integrated product of stainless steel and CFRP used in hydrogen storage tanks, food processing machinery, medical equipment, general machinery and other machinery is made to be a product that is lighter and has a more rational design. It has been found that a stainless steel material 22 having special constant ultra-fine irregularities on the surface thereof is compatible with an epoxy resin adhesive and exhibits thus strong adhesion. A stainless steel composite 20 can be produced by integrating stainless steel thick plate pieces 22 as a cover material with a CFRP 21 using this technique, and the composites can be assembled with other metal members through bolt fastening. Also, structural members having the CFRP 21 in the main structure and metal at the ends can be easily produced by virtue of the above strong adhesion. These structural members can be easily assembled with and disassembled from other part by way of bolts/nuts and screws.

## Description

### TECHNICAL FIELD

The present invention relates to a composite of, for instance, stainless steel and stainless steel, stainless steel and another metal alloy, or stainless steel and a fiber-reinforced plastic, as used in industrial machinery such as transport equipment, electric equipment, medical equipment or general machinery, as well as in consumer appliances. The invention relates also to a joining method of such a composite. More particularly, the present invention relates to a stainless steel composite and a manufacturing method thereof, the stainless steel composite employing both a fiber-reinforced plastic (hereafter, FRP) and a stainless steel used in hydrogen storage tanks, food processing machinery, medical equipment, general machinery and other machinery, the stainless steel composite also being employed in parts, chassis, bodies and the like of various devices, machinery and systems.

### BACKGROUND ART

Technologies for integrating metals with resins are required in a wide variety of industrial fields, for instance in the manufacture of parts of automobiles, domestic appliances, industrial machinery or the like. Numerous adhesives have been developed to meet these requirements. Various excellent adhesives, now in wide use, have been proposed. For instance, adhesives that bring out their functionality at normal temperature, or upon heating, are used to integrally bond a metal and a synthetic resin. This method constitutes a standard bonding technique used at present.

Meanwhile, other bonding technologies that do not rely on adhesives have also been developed. Examples of such technologies include, for instance, methods for integrating light metals, such as magnesium, aluminum or alloys thereof, or ferrous alloys such as stainless steel, with high-strength engineering resins, without any intervening adhesive. Manufacturing technologies that have been developed and proposed by the inventors include a method that involves injection-molding a resin article and, simultaneously therewith, bonding the molded resin with a metal insert placed beforehand in the injection mold (hereafter, "injection bonding"). For instance, a polybutylene terephthalate resin (hereafter, "PBT"), or a polyphenylene sulfide resin (hereafter, "PPS"), is injected and bonded with an aluminum alloy (for instance, Patent documents 1 and 2). In addition, the possibility of using these resins systems in injection bonding of magnesium alloys, copper alloys, titanium alloys and stainless steel has recently been demonstrated and proposed (Patent documents 3, 4, 5 and 6). These inventions, all of which stem from the same inventors, derive from a comparatively simple bonding theory.

The theory encompasses an "NMT" theoretical hypothesis, so named by the inventors, relating to injection bonding of aluminum alloys, and a "new NMT" theoretical hypothesis relating to injection bonding of all metal alloys. The theoretical hypothesis "new NMT", having a wider scope, and advanced by one of the inventors (Naoki Ando), posits the following. Injection bonding for bringing out a strong bonding strength (fixing strength) requires that both the metal and the injection resin meet several conditions. Among these, the metal must meet the conditions below. Specifically, the metal alloy used for injection bonding must meet three conditions, as follows. In the first condition, the chemically etched metal alloy has a rough surface (surface roughness) having a texture of a period of 1 to 10 µm and a profile height difference of about half the period, i.e. about 0.5 to 5 µm.

Causing such roughness to cover the entire surface is difficult to achieve in practice by relying on chemical treatments where variability is a concern. In concrete terms, the above-mentioned roughness conditions are found to be substantially met when the rough surface (surface having a certain roughness) exhibits a texture of regular or irregular period from 0.2 to 20 µm and yields a roughness curve with a maximum height difference ranging from 0.2 to 10 µm, as observed using a profilometer (surface roughness meter), or exhibits an average period, i.e. an average length (RSm) of 0.8 to 10 µm and a maximum height roughness (Rz) of 0.2 to 10 µm, according to JIS Standards (JIS B 0601:2001(ISO 4287)), based on scanning analysis using the latest scanning probe microscopes.

For the inventors, the period of the irregular shapes of the ideal rough surface ranges from 1 to 10 µm, as described above. This range constitutes a "surface of micron-scale roughness" in an easily understandable definition. Preferably, the inner wall face of the recesses in the surface has ultra-fine irregularities of a period not smaller than 10 nm, preferably a period of 50 nm, as a result of an oxidation treatment or the like (second condition). Also, the surface that constitutes the above complex surface shape is a ceramic substance, specifically a metal oxide layer thicker than a native oxide layer (third condition). As regards the conditions of the resin that is bonded or joined to the metal alloy, suitable resins that can be used are hard crystalline resins having a slower crystallization rate upon rapid cooling, for instance through compounding with other polymers that are appropriate for the resin. In practice there can be used resin compositions in which a crystalline hard resin such as PBT, PPS or the like is compounded with other appropriate polymers, as well as with glass fibers and the like. These resin compositions can be injection-bonded using ordinary injection molding machines and injection molding molds. The injection bonding process is explained next according to the "new NMT" hypothesis.

The injected molten resin is led into a mold at a temperature lower than the melting point of the resin by about 150°C. The molten resin is found to cool within flow channels, such as sprues, runners and the like, down to a temperature lower than the melting point. It will be appreciated that no phase change to solid occurs in zero time, i.e. instantly, through crystallization when the molten crystalline resin is cooled rapidly, even at or below the melting point of the resin. In effect, the molten resin persists in a molten, supercooled state for a very short time also at or below the melting point. The duration of this supercooling appears to have been successfully prolonged somewhat in PBT and PPS through some special compounding, as described above. This feature can be exploited to cause the molten resin to penetrate into large, micron-scale recesses on the surface of the metal, before the abrupt rise in viscosity that accompanies the generation of large amounts of micro-crystals. After having penetrated into the recesses, the molten resin goes on cooling, whereby the number of micro-crystals increases dramatically, causing viscosity to rise abruptly. The size and shape of the recesses determine whether the molten resin can penetrate or not all the way into the recesses.

Experimental results have revealed that, irrespective of the type of metal, the molten resin can penetrate all the way into recesses having a diameter of 1 to 10 µm, and into recesses having a roughness period of 1 to 10 µm, provided that the depth or height difference of the recesses is about half the period. When the inner wall faces of the recesses have a rough surface, as evidenced in microscopic observations (electron micrographs), as per the second condition above, the resin penetrates partly also into the crevices of these ultra-fine irregularities. As a result, the resin catches onto the fine irregularities and is difficult to pull away when a pulling force acts from the resin side. Such a rough surface affords an effective spike-like catching when the surface is that of a high-hardness metal oxide, as per the third condition. Although bonding per se is a question of the resin component and the surface of the metal alloy, adding reinforcing fibers or an inorganic filler to the resin composition allows bringing the coefficient of linear expansion of the resin as a whole closer to that of the metal alloy. This allows preserving easily the bonding strength after bonding. Composites obtained through injection bonding of a crystalline resin such as a PBT or PPS resin, with a magnesium alloy, copper alloy, titanium alloy, stainless steel or the like, in accordance with the above hypothesis, are strong integrated products, having a shear fracture strength of 200 to 300 Kgf/cm² (about 20 to 30 N/ mm²=20 to 30 MPa).

The present inventors believe the "new NMT" theory to be true as borne out in injection bonding of numerous metal alloys. The advocated hypothesis, which is based on inferences relating to fundamental aspects of polymer physical chemistry, must however be vetted by many chemists and scientists. Questions to be addressed include whether the crystallization rate really drops in crystalline resins that melt upon rapid cooling, as we have argued but without conclusive evidence. Conventional polymer physics does not contemplate that kind of kinetics. The inventors, who have found no academic explanations underlying these kinetics hypotheses, have nonetheless demonstrated the hypothesis to be correct, although they have not conducted any corroborative experimentation as regards resin crystallization rates under rapid cooling. Specifically, the reaction of the hypothesis is a high-rate reaction at high temperature and under high pressure, and thus cannot be measured directly.

The hypothesis, moreover, postulates a purely physical anchor effect underlying bonding, which deviates somewhat from conventional knowledge. Most monographs and the like concerned with adhesion and authored by specialists ordinarily ascribe chemical factors to the causes underlying adhesive forces. Owing to the experimental difficulties involved, the inventors gave up on validating their hypothesis through direct experimentation, and decided on a reverse approach. Specifically, the inventor's assumed that the "new NMT" theoretical hypothesis can be applied also to adhesive bonding, and set out to study whether high-performance adhesive phenomena can be proved by a similar theory. That is, the inventors decided to ascertain whether non-conventional bonded systems can be discovered based only on the surface state of adherend materials, and by using commercially available general-propose epoxy adhesives.

Remarkable developments have been achieved in bonding by way of adhesives. In particular, high-technology adhesives are being used in aircraft assembly. In these technologies, bonding is accomplished using high-performance adhesives, following a surface treatment in which a metal alloy is imparted corrosion resistance and microscopic texture. On closer inspection, however, metal surface treatment methods such as phosphoric acid treatment, chromate treatment and anodization rely still on staple treatment methods developed 40 or more years ago, and it seems as though no new developments have come along in recent years. As regards the development of adhesives themselves, mass production of instant adhesives took off several decades ago, and no new breakthroughs have been achieved since the landmark introduction of second-generation acrylic adhesives. From the viewpoint of adhesion theory as well, and although the inventors may not be aware of the very latest academic trends, the chemical and physical explanations jointly proffered in the commercially available monographs and the like appear to us lacking in clarity and also in ideas that may lead to further developments.

Fortunately, it is possible to use nowadays, freely and inexpensively, electron microscopes having resolutions of several nm. The inventors have therefore argued their "NMT" and "new NMT" hypotheses relating to injection bonding on the basis of observations of such high-resolution micrographs. As a result of the observations, the inventors eventually proposed the above-mentioned hypothesis, thoroughly based on anchor effects. Therefore, we expected novel phenomena to be observed as a result of working on adhesion theory, in terms of adhesive bonding, by emphasizing the physical aspects. Stainless steel is a high-strength metal alloy having very high corrosion resistance. Therefore, the inventors had already used injection bonding (Patent document 6) to produce prototypes of automotive parts using stainless steel and a PPS resin. In parallel, the inventors wondered whether it would be possible to manufacture structural members, outer panel members and other parts for similar transport equipment, not by injection bonding but by using adhesives.

In particular, carbon fiber reinforced plastics (hereafter, "CFRP") have the highest tensile strength among structural materials, including metals, and are ultra-lightweight, having a specific weight of 1.6 to 1.7. Lightweight and strong parts could potentially be manufactured if both high-strength and corrosion-resistant CFRP and stainless steel could be combined. CFRP prepregs are fabrics or aggregates of carbon fibers (hereafter, "CF") impregnated with an uncured epoxy resin. Matching the curing temperature characteristics of the epoxy resin in the prepreg with those of the epoxy adhesive coated onto the metal should allow curing simultaneously the resins in both epoxy adhesives, thereby making integration of prepreg and of metal comparatively simple. Therefore, we felt that first of all it was necessary to conduct diligent research and development on how to improve and stabilize bonding forces between stainless steel and epoxy adhesives during the manufacture of an integrated product. Thus, we endeavored to develop a method that affords strong bonding with fiber-reinforced plastics (hereafter, "FRPs"), in particular CFRPs, by focusing on the development of surface treatment techniques for stainless steels.

Patent document 1: WO 03/064150 A1
Patent document 2: WO 2004/041532 A1
Patent document 3: PCT/JP 2007/073526(WO 2008/069252 A1)
Patent document 4: PCT/JP 2007/070205(WO 2008/047811 A1)
Patent document 5: PCT/JP 2007/074749(WO 2008/078714 A1)
Patent document 6: PCT/JP 2007/075287(WO 2008/081933 A1)

### DISCLOSURE OF THE INVENTION

To achieve the above goal, the present invention encompasses the aspects below.
A stainless steel composite of Invention 1 comprises
a first metal part being a part which is made of stainless steel and has micron-scale roughness produced by chemical etching, and substantially the entire surface of which is covered with, under electron microscopy, ultra-fine irregularities in the form of scree on a lava plateau slope in which granules or irregular polyhedral bodies having a diameter of 20 to 70 nm are stacked, the ultra-fine irregularities being a thin layer of a metal oxide; and
another adherend that is bonded using, as an adhesive, an epoxy adhesive (1) that penetrates into the ultra-fine irregularities.

A stainless steel composite of Invention 2 is the stainless steel composite of Invention 1, wherein the adherend is a second metal part made of stainless steel having the ultra-fine irregularities formed thereon.
A stainless steel composite of Invention 3 is the stainless steel composite of Invention 1 or 2, wherein the adherend is a fiber-reinforced plastic, comprising the epoxy adhesive, and reinforced through filling and laminating of one or more types selected from among long fibers, short fibers and fiber cloth.

A stainless steel composite of Invention 4 is any of the stainless steel composites of Inventions 1 to 3, wherein the micron-scale surface roughness has an average length (RSm) of 0.8 to 10 µm and a maximum height roughness (Rz) of 0.2 to 5 µm.
A stainless steel composite of Invention 5 is any of the stainless steel composites of Invention 1 to 4, wherein the chemical etching involves immersion in an aqueous solution of a non-oxidizing strong acid.

A stainless steel composite of Invention 6 is Invention 5, wherein the aqueous solution of a non-oxidizing strong acid is an aqueous solution of sulfuric acid.
A stainless steel composite of Invention 7 is any of Inventions 1 to 6, wherein a resin of a cured product (1) of the epoxy adhesive comprises 0 to 30 parts by mass of an elastomer component relative to a total 100 parts by mass of resin fraction.

A stainless steel composite of Invention 8 is any of Inventions 1 to 7, wherein a cured product (1) of the epoxy adhesive contains a total of 0 to 100 parts by mass of a filler relative to a total 100 parts by mass of resin fraction.
A stainless steel composite of Invention 9 is Invention 8, wherein the filler is one or more types of reinforcing fiber selected from among glass fibers, carbon fibers and aramid fibers, or
one or more types of powder filler selected from among calcium carbonate, magnesium carbonate, silica, talc, clay and glass.

A stainless steel composite of Invention 10 is Invention 7, wherein the elastomer component has a particle size of 1 to 15 µm, and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C, and a polyolefin resin.

A method for manufacturing a stainless steel composite of Invention 1 comprises
a machining step of mechanically shaping a stainless steel part from a casting or an intermediate material;
a chemical etching step of immersing the shaped stainless steel part in an aqueous solution of sulfuric acid;
a coating step of coating an epoxy adhesive onto required portions of the stainless steel part;
a cutting step of cutting a prepreg material of fiber-reinforced plastic to the required size;
an affixing step of affixing the prepreg material to the coated surface of the stainless steel part; and
a curing step of curing the entire epoxy resin fraction in the epoxy adhesive by positioning, pressing and heating the prepreg material and the stainless steel part.

A method for manufacturing a stainless steel composite of Invention 2 comprises
a machining step of mechanically shaping a stainless steel part from a casting or an intermediate material;
a chemical etching step of immersing the shaped stainless steel part in an aqueous solution of sulfuric acid;
a coating step of coating an epoxy adhesive onto required portions of the stainless steel part;
a curing pre-treatment step of placing the stainless steel part, having been coated with the epoxy adhesive, in an airtight vessel, depressurizing the vessel, and then pressurizing the vessel to thereby push the epoxy adhesive into fine recesses on the surface of the stainless steel part;
a cutting step of cutting a prepreg material of fiber-reinforced plastic to the required size;
an affixing step of affixing the prepreg material to the coated surface of the stainless steel part; and
a curing step of curing the entire epoxy resin fraction in the epoxy adhesive by positioning, pressing and heating the prepreg material and the stainless steel part.
   The elements that constitute the present invention are explained in detail below.

### [Stainless alloy part]

The stainless steel in the present invention refers to known corrosion-resistant ferrous alloys called stainless steel and which include, for instance, Cr stainless steel resulting from adding chromium (Cr) to iron, and Cr-Ni stainless steel comprising combination of nickel (Ni) and chromium (Cr). Cr stainless steels include, for instance, SUS405, SUS429 or SUS403, while Cr-Ni stainless steels include, for instance, SUS301, SUS304, SUS305 or SUS316, according to the International Organization for Standardization (ISO), Japanese Industrial Standards (JIS) or the American Society for Testing and Materials (ASTM).

### [Chemical etching of stainless steel]

Stainless steels have distinctive record of chemical resistance, since they have been developed with a view to enhancing corrosion resistance. Although there are various kinds of corrosion, such as general corrosion, pitting, fatigue corrosion and the like, optimal etchants can be selected by undertaking trial and error testing of chemicals that elicit general corrosion. Reports in the literature (for instance, "Kagaku Kogaku Benran", Handbook of Chemical Engineering, sixth ed., Society of Chemical Engineers of Japan, Maruzen (1999)" indicate that general corrosion can be broadly achieved in stainless steels by using aqueous solutions of hydrohalide acids such as hydrochloric acid, or aqueous solutions of hydrogen sulfide, sulfuric acid, or halide metal salts. Some stainless steels, which are otherwise resistant to corrosion against many chemicals, have a shortcoming in that they are susceptible to corrosion by halides. This shortcoming is less of a concern in, for instance, stainless steels having reduced carbon content, as well as stainless steels to which molybdenum is added.

Essentially, however, the above-described aqueous solutions give rise to general corrosion, and hence the dipping conditions are best modified in accordance with the type of stainless steel. In structural terms, moreover, the metal grain size increases, with fewer grain boundaries, when hardness is lowered through annealing or the like. It becomes then difficult to bring general corrosion about deliberately. In such cases, the result of simply modifying the dipping conditions to conditions that allow corrosion to occur is that etching hardly progresses to the intended level. Something must then be done, for instance adding some additive. In any case, the purpose or chemical etching, as a pre-treatment, is to bring about roughness over most of the surface, with irregularities having a period unit of 1 to 10 µm and a profile height difference of about half the period, as described above.

No special degreasing agent is required. Thus, a commercially available ordinary degreasing agent for stainless steel, a degreasing agent for iron, or a degreasing agent for aluminum alloys, or a commercially available general-purpose neutral degreasing agent is procured, and the degreasing agent is used, following the instructions of the vendor, to prepare an aqueous solution having a concentration of several % at a temperature of 40 to 70°C. The stainless steel to be treated is immersed in that aqueous solution for 5 to 10 minutes. This constitutes the degreasing treatment. Preferably, the stainless steel is immersed next, for a short time, in a several % aqueous solution of caustic soda, to cause basic ions to become adsorbed on the surface, and is rinsed with water thereafter. This operation affords good reproducibility in the subsequent chemical etching. The above constitutes a preliminary basic washing step. The etching step follows next.

In the case of SUS304, preferably, an approximately 10% aqueous solution of sulfuric acid is brought to 60 to 70°C, and the steel is treated through immersion in the aqueous solution for several minutes. This treatment elicits the micron scale roughness required in the present invention. In the case of SUS316, preferably, an approximately 10% aqueous solution of sulfuric acid is brought to 60 to 70°C, and the steel is treated through immersion in the aqueous solution for 5 to 10 minutes. Aqueous solutions of hydrohalide acids such as hydrochloric acid are also suitable for etching, but in this case part of the acid in the aqueous solutions evaporates upon heating, and may corrode surrounding ferrous structures. The evacuated gas, moreover, must be treated somehow. In terms of cost, therefore, it is preferable to use an aqueous solution of sulfuric acid. Depending on the steel material, however, using an aqueous solution of sulfuric acid alone may cause excessive general corrosion. In such cases, it is effective to etch the steel by adding some hydrohalide acid to the aqueous solution of sulfuric acid.

### [Surface hardening of the stainless steel]

Thorough water rinsing after the above chemical etching causes a native oxide to form over the surface of the stainless steel, so there is no need for a particular hardening treatment to restore a corrosion-resistant surface layer. Preferably, however, the stainless steel is immersed in an aqueous solution of an oxidizing agent, for instance an oxidizing acid such as nitric acid, i.e. nitric acid, hydrogen peroxide, potassium permanganate, sodium chlorate or the like, to thicken the metal oxide layer on the surface of the steel thus strengthening the latter.

A stainless steel having high bonding strength with epoxy adhesives is selected, and is observed under the electron microscope. Thereupon, preferably, the stainless steel exhibits fine irregularities of a recognizable shape. Needless to say, the stainless steel may be subjected to an injection bonding test after having been observed by electron microscopy. Be that as it may, a stainless steel exhibiting a fine-structure surface reliably covered with a fine texture having a period of several tens of nm to a hundred nm, preferably a period of about 50 nm, can be expected to exhibit high injection bonding strength. As described above, the inventors have already verified such fine-structure surfaces in magnesium alloys, aluminum alloys, copper alloys and titanium alloys.

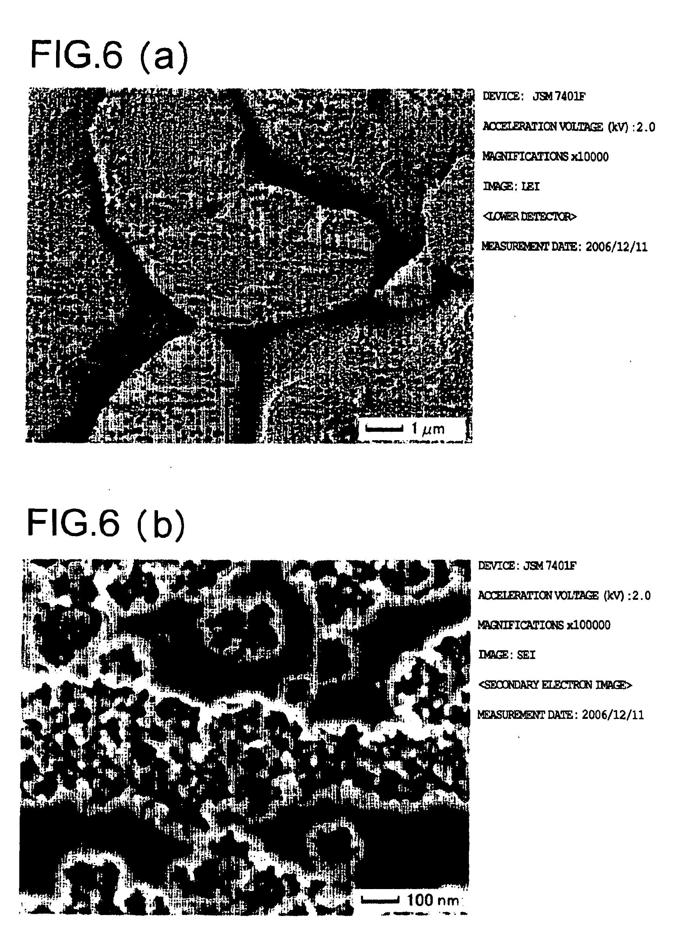

An explanation follows next on an actual example of chemical etching of stainless steel using an aqueous solution of sulfuric acid. A rough surface (surface roughness) such as the above-described one can be obtained by appropriate etching. The rough surface can be observed using a profilometer (surface roughness meter), a scanning probe microscope or the like. Electron microscopy observation of the surface reveals that the surface is covered with highly suggestive ultra-fine irregularities. Fine etching of the stainless steel is formed simultaneously just by chemical etching, such as the above-described one. Electron micrographs of such fine-etched surfaces are explained next. Micrographs (Figs. 6(a) and (b)) of an example of a fine-etched surface showed shapes of stacks of, for instance, granules and irregular polyhedral bodies having a diameter of 20 to 60 nm. In the micrograph at 10,000 magnifications (Fig. 6(a)) and in the micrograph at 100,000 magnifications (Fig. 6(b)), these shapes appeared just like scree (mountaineering term) on slopes of lava plateaus formed by flowing lava around volcanoes.

XPS analysis of the stainless steel covered with such ultra-fine irregularities that constitute the etched surface revealed large peaks for oxygen and iron, and small peaks for nickel, chromium, carbon and molybdenum. In short, the surface is a metal oxide of a metal having exactly the same composition as that of ordinary stainless steel. The etched stainless steel is thus covered with the same corrosion-resistant surface as before etching. The importance of the adopted chemical etching method is explained next. Although any method may be used to achieve the above-described anticipated surface morphology, chemical etching is employed as the etching method since ultra-fine irregular surfaces can be realized, according to design, when employing current high-performance ultra-fine processing methods based on photochemical resists and using visible or ultraviolet rays as in the present invention.

A further reason is that, besides involving a simple operation, chemical etching is particularly preferred for injection bonding, since if chemical etching is carried out under appropriate conditions, then appropriate irregular periods and recesses of appropriate depth are achieved, and the fine morphology of the obtained recesses does not comprise simple shapes. Also, many of obtained recesses exhibit an understructure. As used in the present invention, the term understructure refers to a surface that cannot be observed when the recesses are viewed perpendicularly from above. Such a surface forms overhangs that would be visible, in a micro scale, from the bottom of the recesses. It will be easily appreciated that such an understructure is necessary for injection bonding.

After etching using the above-described reducing acid aqueous solution, the stainless steel was dipped in an aqueous solution of nitric acid, hydrogen peroxide or the like, as a supplementary treatment for reliably forming a metal oxide layer. However, electron micrographs revealed no clear difference between carrying out or not this supplementary treatment, in terms of the bonding strength elicited upon adhesive bonding. A difference in bonding strength might be made apparent in long-term weatherability tests, but this possibility has not been verified yet.

### [Epoxy resin adhesive and application thereof]

Many excellent commercially available epoxy adhesives can be used as the epoxy adhesive of the invention. Likewise, starting materials can be easily procured to produce an epoxy adhesive from scratch. Commercially available epoxy resins include, for instance, bisphenol epoxy resins, glycidylamine epoxy resins, polyfunctional polyphenol-type epoxy resins, alicyclic epoxy resins and the like. Any of these can be used as the material employed in the present invention. These epoxy resins may also be used joined to each other through reaction with a polyfunctional third component, for instance a polyfunctional oligomer having a plurality of hydroxyl groups. In the present invention, the epoxy adhesive is preferably obtained by mixing an epoxy resin with a polyfunctional amine compound added as a curing agent to the epoxy resin.

### [Elastomer component, filler component etc.]

Preferably, an elastomer component, a filler component and the like are added to the epoxy adhesive in terms of bringing the coefficient of linear expansion of the epoxy adhesive to be comparable to that of the stainless steel and close to that of a CFRP material, and to achieve a buffer material upon application of a thermal shock. In terms of enhancing impact resistance and thermal shock resistance, the elastomer component is preferably mixed in an amount of ranging from 0 to 30 parts by weight (no more than 30 parts by weight) relative to a total 100 parts by weight of the resin fraction (epoxy resin component + curing agent component). An excess of elastomer component beyond 30 parts by weight results in a drop in bonding strength, and is hence undesirable. A vulcanized rubber powder having a particle size of 1 to 15 µm is an example of the elastomer component.
Elastomer component particles having a size of several µm are too large to intrude into the ultrafine irregularities on the aluminum alloy during application of the adhesive. The particles remain thus in the adhesive layer and do not affect the anchor portions. As a result, there is no drop in bonding strength, while resistance to thermal shocks is an added benefit.

Although any type of vulcanized rubber can be used, in practice it is difficult to pulverize rubber to particles of several µm, regardless of rubber type. The inventors looked into the matter but found that there is little research and development being carried out on methods for manufacturing microparticle-vulcanized rubber. The inventors adopted a method that involved mechanical crushing and sorting, for instance, of rubber vulcanized products, rubber unvulcanized products, and thermoplastic resins having been cooled in liquid nitrogen. Unfortunately, the manufacturing efficiency and cost issues associated with this method negate its commercial feasibility. Another approach involves using, for instance, unvulcanized or semi-crosslinked rubber, and modified super engineering plastics or polyolefin resins. Examples of the modified super engineering plastics include, for instance, a hydroxyl group-terminated polyether sulfone "PES100P (by Mitsui Chemicals, Tokyo, Japan)". The polyolefin resin used is preferably an already-developed polyolefin resin that mixes readily with epoxy resins.

The inventors expect the durability against thermal shock to be theoretically inferior in elastomeric synthetic resins, such as polyolefin resins, as compared with that of powder vulcanized rubbers, although this is not yet well understood, since the method itself for evaluating durability against thermal shock based on an experimental method by the inventors has not been yet fully perfected. In any case, including unvulcanized elastomers in the mixture elicits resistance against thermal shock. Examples of such polyolefin resins include, for instance, maleic anhydride-modified ethylene copolymers, glycidyl methacrylate-modified ethylene copolymers, glycidyl ether-modified ethylene copolymers, ethylene-alkyl acrylate copolymers and the like. Examples of the maleic anhydride-modified ethylene copolymers that can be used include, for instance, maleic anhydride graft-modified ethylene copolymers, maleic anhydride-ethylene copolymers, ethylene-acrylate-maleic anhydride terpolymers and the like. Particularly preferred among the foregoing are ethylene-acrylate-maleic anhydride terpolymers, as these allow obtaining superior composites. Concrete examples of the ethylene-acrylate-maleic anhydride terpolymers include, for instance, "Bondine(trademark) by Arkema, (Paris, France)".

As the glycidyl methacrylate-modified ethylene copolymers there can be used, for instance, glycidyl methacrylate graft-modified ethylene copolymers and glycidyl methacrylate-ethylene copolymers. Particularly preferred among the foregoing are glycidyl methacrylate-ethylene copolymers, as these allow obtaining superior composites. Specific examples of the glycidyl methacrylate-ethylene copolymers include, for instance, "Bond First(trademark) by Sumitomo Chemical". Examples of the glycidyl ether-modified ethylene copolymers that can be used include, for instance, glycidyl ether graft-modified ethylene copolymers and glycidyl ether-ethylene copolymers. Specific examples of the ethylene-alkyl acrylate copolymers include, for instance, "Lotryl(trademark) by Arkema".

### [Filler component in the epoxy adhesive]

The filler component added to the epoxy adhesive is explained next. Preferably, an epoxy adhesive composition is used that further comprises 0 to 100 parts by weight, more preferably 10 to 60 parts by weight, of a filler, relative to a total 100 parts by weight of resin including the elastomer component. Examples of the filler that is used include, for instance, a reinforcing fiber-based filler such as carbon fibers, glass fibers, aramid fibers and the like; or a powder filler such as calcium carbonate, mica, glass flakes, glass balloons, magnesium carbonate, silica, talc, clay, as well as pulverized carbon fibers and aramid fibers. Adjustment of a specific epoxy adhesive is explained next. An adhesive composition (uncured epoxy adhesive) is obtained by thoroughly mixing an epoxy resin main material, a curing agent, an elastomer and a filler, and as the case may require, also a small amount of a solvent (commercially available ordinary solvent) for epoxy adhesives, with a view to obtaining a desired viscosity. The adhesive composition is applied on required portions of the surface of a stainless steel product having had the surface thereof treated as described above. The adhesive composition may be applied manually, with a brush, or using a coating machine

### [Processing after application of the epoxy resin adhesive]

After application of the epoxy resin adhesive, the coated part is preferably placed in a vacuum vessel or a pressure vessel. The pressure in the vessel is reduced to near vacuum. After several minutes, air is infused to revert the vessel to normal pressure. Alternatively, the coated part is placed thereafter in an environment under a pressure of several atmospheres to several tens of atmospheres. Preferably, a cycle of depressurization and pressurization is repeated. Air or gas in the interstices between the coating material and the stainless steel is evacuated as a result, which makes it easier for the coating material to penetrate into ultrafine recesses. A method employing high-pressure air in a pressure vessel entails high costs in terms of equipment and expenses for actual mass production. Therefore, carrying out one cycle, or several cycles of depressurization and return to normal pressure using a vacuum vessel should be more appropriate, both in economical and technical terms. In the case of the stainless steel of the present invention, sufficiently stable bonding strength can be achieved through several cycles of reduced pressure and return to normal pressure. After being removed from the vacuum vessel, the stainless steel composite is preferably left to stand for about 30 minutes or more in an environment at normal temperature or at a temperature of about 40°C. This allows evaporating a substantial part of solvent that may have been added to the epoxy adhesive.

### [FRP prepreg]

The most lightweight and high-strength CFRP can be effectively used in the composite of the present invention, as explained below. The CFRP prepreg used in the present invention CFRP prepreg may be an ordinary commercially available CFRP prepreg, without further modification. Examples of the commercially available CFRP prepregs that can be used include, for instance, prepregs in which the above-described epoxy adhesive is impregnated into a carbon fiber cloth, or prepregs in which a provisional film comprising the uncured epoxy resin is formed and is then overlaid on the carbon fiber cloth. Also, CFRP prepreg can be easily produced from scratch by using a one-liquid epoxy adhesive and a carbon fiber cloth. The epoxy resins in the employed CFRP prepreg are often dicyandiamide-cured or amine-cured epoxy resins, and are in a B-stage (uncured state close to solid) at normal temperature. The epoxy resin melts then through a rise in temperature to hundred and several tens of degrees, after which the epoxy resin gels and becomes cured.

A prepreg portion is prepared through cutting to a required shape and stacking to a required form. When using a stack of a plurality of plies of unidirectional prepreg (prepreg comprising a web weaved with substantial warp but very little weft), the directionality of the strength in the ultimately obtained CFRP sheet material can be controlled by overlaying the fiber directions of the prepreg plies and/or by overlaying the plies at an angle. Such assembly requires therefore considerable know-how. The warp-weft counts are identical in articles obtained through weaving of carbon fibers. Equal strength in all directions seems to be achieved by overlaying prepregs alternately changing the angle between plies by 45 degrees. In short, the required number of plies and the overlaying scheme are designed beforehand, and then the prepregs are cut and overlaid in accordance with the design. This completes the preparation of the prepregs.

### [Method for laminating prepreg and manufacturing a stainless steel composite]

The above-described CFRP prepreg is laid on a stainless steel part having being coated with the above-described epoxy adhesive. When the whole is heated in this state, the epoxy resin in the epoxy resin adhesive and in the prepreg melts once and becomes subsequently cured. To firmly bond the stainless steel part and the CFRP prepreg, these are heated in a compressed state against each other. Air trapped in gaps between the stainless steel part and the prepreg must be driven out during melting of the resin. For instance, a support base is manufactured beforehand in accordance with the rear face shape of the face to be bonded of the stainless steel. A polyethylene film is laid over the base, and then the stainless steel part is placed thereon. A CFRP prepreg is laid on the stainless steel part, and a polyethylene film is laid on the CFRP prepreg. Then, a fixing member (fixing jig) such as a structural member or the like, manufactured separately in accordance with the CFRP prepreg shape, is placed on the polyethylene film. A weight is further placed on the whole, to enable pressing and fixing during thermal curing. Obviously, the stainless steel part and the prepreg need only be cured while pressing against each other, and hence various pressing methods can be devised other than using the weight of a load.

Heating of the CFRP prepreg is accomplished by placing the stainless steel part and the overlaid CFRP prepreg in a heating means such as a hot-air dryer or an autoclave, where the whole is heated. Ordinarily, heating is carried out at a temperature of 100 to 140°C. The adhesive component melts once and gels over about several tens of minutes. Preferably, heating proceeds then for several tens of minutes at a higher temperature of 150 to 170°C, to bring curing about. The optimal temperature conditions vary depending on the epoxy component and the curing agent component. After heating and cooling, the molded product is removed from the fixing jig. When using the above-described polyethylene films for enabling smooth demolding from the fixing jig, these are likewise removed.

### [Example of a method of using the composite]

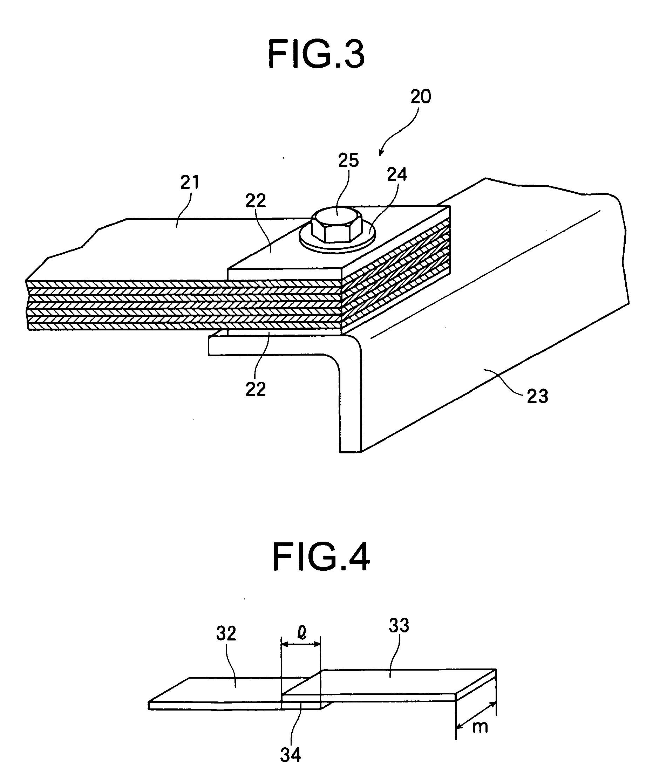

Fig. 3 is a single-view diagram of a structure illustrating an example of a joining method during joining of the stainless steel composite of the present invention and a metallic structural member (angle member) using bolts and nuts. A stainless steel composite 20 is an integrated composite of stainless steel and CFRP. The CFRP 21 is a plate-like structure manufactured through baking of prepreg. The angle member 23 for structures is an already-manufactured structural member having an L-shaped cross section. Rectangular reinforcing plate materials 22 are integrally bonded to the front and rear faces of the CFRP 21. The material of the reinforcing plate materials 22 is stainless steel. The reinforcing plate materials 22 are baked and integrally bonded beforehand to the CFRP 21 in accordance with the above-described method.

The CFRP 21, the reinforcing plate materials 22 on the front and rear of the CFRP 21, and the angle member 23 are fixed together, by way of a washer 24 arranged on the reinforcing plate materials 22 and a washer and nut (not shown) disposed on the underside of the angle member 23, in such a manner so as to be prevented from moving relative to each other by means of a bolt 25. The bonding strength between the rectangular plate materials 22 made of stainless steel and the CFRP 21, is considerable, of 50 MPa or higher in terms of shear fracture strength. The fastening forces exerted by the bolt 25 and the washer 24 on the plate materials 22 can be appropriately distributed and equalized over the CFRP 21. In brief, only the plate materials 22 made of stainless steel are deformed, even when the bolt 25 and the nut are fastened with a strong fastening force, so that the CFRP 21 in the composite 20 remains undamaged. As described above, stainless steel and CFRP can be bonded strongly to each other in the stainless steel composite and manufacturing method thereof of the present invention.

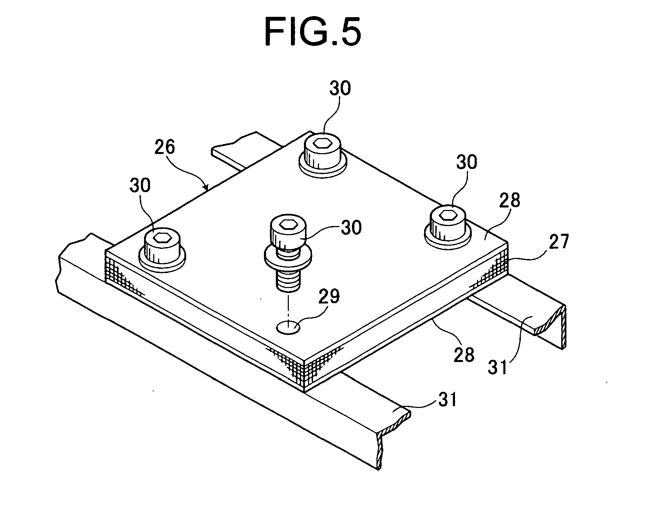

Fig. 5 illustrates an example of the use of CFRP in which stainless steel thin plates are bonded to the front and rear faces of a flat plate-like CFRP. A composite plate material 26 has a three-layer structure in which a CFRP 27 is laminated as a core layer, and stainless steel thin plates 28 are bonded to the front and rear faces of the CFRP 27. Through-holes 29 are opened in the composite plate material 26. Bolts 30 are inserted through the through-holes 29. The bolts 30 run also through angle members 31, having an L-shaped cross section, disposed below the composite plate material 26. The bolts 30 are screwed into nuts (not shown), disposed on the underside of the angle members 31. As a result, the composite plate material 26 and the angle members 31 make up a single structure. The stainless steel plates 28 are bonded to the front and rear faces of the CFRP 27, and hence the CFRP 27 is not damaged on account of, for instance, the fastening pressure exerted by the fastening bolts 30, or through friction with the bolts 30. The composite plate material 26, therefore, brings out the characteristics of both the CFRP 27 and the stainless steel thin plates 28, and can thus make up a structure that is lightweight and mechanically strong.

As explained in detail above, the stainless steel composite and manufacturing method thereof of the present invention allow providing, for instance, tough parts and structures in which a stainless steel and FRP are strongly integrated together. Specifically, the stainless steel composite can be used in structural parts, structures and the like used in mobile equipment, for instance in automotive parts, bicycle parts, mobile robots and the like. The stainless steel material is a metal and can hence be used with mechanical joining means such as bolts, nuts, screws, and welding. Thus, FRP can be used concomitantly with the stainless steel material in an easy manner, and hence parts and structures of any shape can be easily manufactured. The other component, that is, FRP component can be easily worked into shaped products, such as plate-like and pipe-like products, rather than complex-shaped products. For instance, it is now possible to manufacture large and/or elongated FRP products. Lightweight and high-strength CFRP, in particular, yields the best structural members available at present.

Therefore, members easy to assemble and take apart can be achieved by using stainless steel at, for instance, the ends of products resulting from integrating VFRP with stainless steel and the like, and by employing mechanical joining means during assembly. The bonding strength with epoxy resins can be dramatically increased by accurately designing and controlling the surface of the stainless steel. Novel processing methods and assembly methods are expected to be made possible by virtue of such a bonding strength.

### BRIEF DESCRIPTION OF THE DRAWINGS

[0081]
Fig. 1 is a cross-sectional diagram of a baking jig for baking during bonding of a stainless steel plate piece and an FRP;
Fig. 2 is an external view diagram of a test piece of a stainless steel composite manufactured through baking of a CFRP and a stainless steel plate piece;
Fig. 3 is an external view diagram illustrating an example of a structure in which an integrated product of a stainless steel plate and FRP is joined and fixed to a structural steel material by way of bolts and nuts;
Fig. 4 illustrates a composite resulting from bonding two stainless steel plate pieces obtained in accordance with the surface treatment method of the present invention, using an epoxy adhesive wherein the test piece is used for measuring the bonding strength between the stainless steel pieces;
Fig. 5 is an external view diagram illustrating the appearance of an example of a structure of an integrated product in which a CFRP is sandwiched between stainless steel plate materials;
Fig. 6(a) is an electron micrograph at 10,000 magnifications of a SUS316 stainless steel piece etched with an aqueous solution of sulfuric acid, and Fig. 6(b) is an electron micrograph at 100,000 magnifications of a SUS316 stainless steel piece etched with an aqueous solution of sulfuric acid;
Fig. 7(a) is an electron micrograph at 10,000 magnifications of a SUS304 stainless steel piece etched with an aqueous solution of sulfuric acid, and Fig. 7(b) is an electron micrograph at 100,000 magnifications of a SUS304 stainless steel piece etched with an aqueous solution of sulfuric acid; and
Fig. 8 is a set of scanning curve diagrams obtained by scanning probe microscopy of a SUS316 stainless steel piece etched with an aqueous solution of sulfuric acid.

### BEST MODE FOR CARRYING OUT THE INVENTION

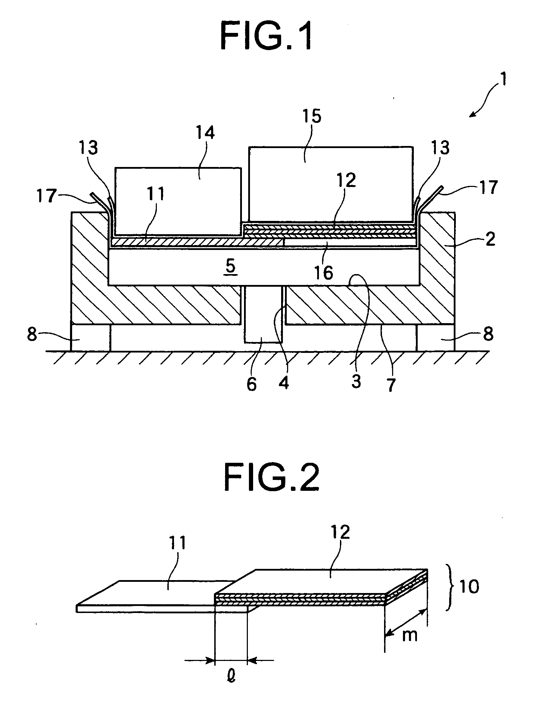

Embodiments of the present invention are explained below based on experimental examples. Fig. 2 illustrates an example of the simplest structure of a stainless steel composite. This composite structure has the standard shape of an integrated product that is a test piece for measuring the bonding strength, in terms of shear fracture strength, between stainless steel and an FRP. Fig. 4 illustrates a composite resulting from bonding two stainless steel plate pieces 32, 33, obtained in accordance with the surface treatment method of the present invention, using an epoxy adhesive. The test piece is used for measuring the bonding strength between the stainless steel pieces. The bonding surface 34 of Fig. 4 is the adhesion surface between the two stainless steel plate pieces 32, 33, and has an area given by m × l, as illustrated in the figure.

(a) X-ray surface observation (XPS observation) ESCA "AXIS-Nova (by Kratos Analytical/Shimadzu (Kyoto, Japan)", was used to observe the constituent elements to a depth of 1 to 2 nm over an area of several µm across.
(b) Electron microscopy
   Observations were carried out at 1 to 2 KV using a SEM electron microscope "S-4800 (by Hitachi, Tokyo, Japan)" and "JSM-6700F (by JEOL, Tokyo, Japan)".
(c) Scanning probe microscopy
   "SPM-9600 (by Shimadzu)" was used.
(d) Measurement of composite bonding strength A tensile tester "Model 1323 (Aikoh Engineering, Osaka, Japan)" was used, to measure shear fracture strength at a pulling rate of 10 mm/minute.

### [Experimental example 1](Stainless steel and adhesive)

A 1-mm thick plate material of commercial stainless steel SUS316 was procured, and was cut into 45 mm × 18 mm rectangular pieces. A degreasing aqueous solution was prepared in a dipping bath by heating, at a temperature of 60°C, an aqueous solution containing 7.5% of a commercially available degreasing agent "NE-6 (by Meltex, Tokyo, Japan)" for aluminum alloys. The stainless steel plate material was immersed for 5 minutes in the above aqueous solution, followed by thorough rinsing with water. Next, the stainless steel plate material was immersed for 1 minute in another dipping bath, having a 1.5% aqueous solution of caustic soda at 40°C, and was thoroughly rinsed with water thereafter. Treatment with a basic aqueous solution, though not essential, is a preliminary basic treatment previous to the subsequent treatment with sulfuric acid. This preliminary basic treatment results in a stable subsequent acid treatment. A 10% aqueous solution of 98% sulfuric acid was prepared next at 65°C. The stainless steel plate pieces were immersed for 3 minutes in the aqueous solution, and were then thoroughly rinsed with deionized water. The pieces were then immersed for 3 minutes in a 3% aqueous solution of nitric acid at 40°C, followed by water rinsing. The pieces were then dried for 15 minutes in a warm-air dryer at 90°C. After drying, the stainless steel plate materials were all wrapped in aluminum foil and was stored further sealed in a polyethylene bag. Two days later, one of the pieces was cut and observed under an electron microscope and a scanning probe microscope.

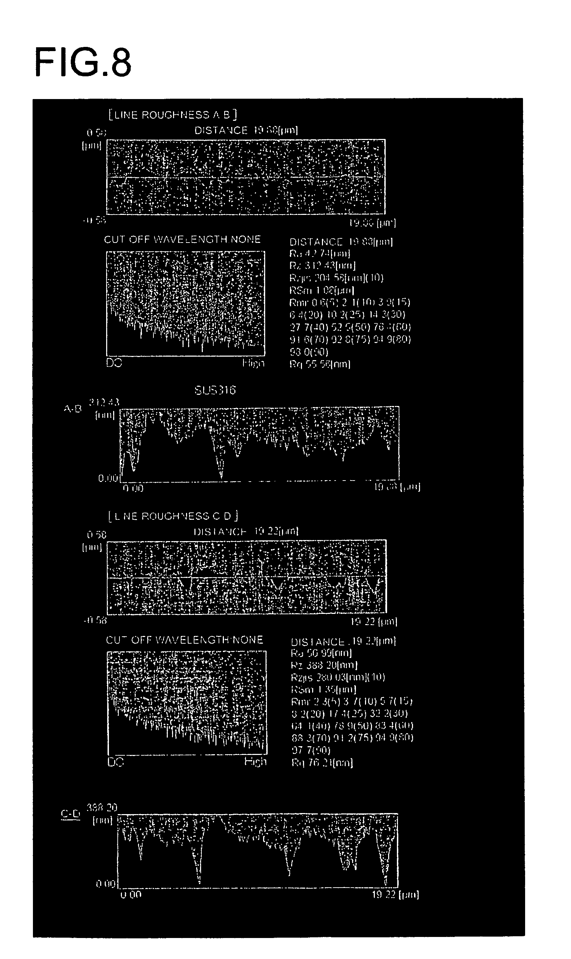

Figs. 6(a), (b) illustrate observation results using an electron microscope at 10,000 and 100,000 magnifications, respectively. The micrograph of Fig. 6(b) shows a surface covered with ultra-fine irregularities shaped as stacks of, for instance, granules and irregular polyhedral bodies having a diameter of 30 to 70 nm, specifically in the form of scree (ordinary mountaineering term) on lava plateau slopes. In the micrograph of Fig. 6(a) the cover ratio of that scree is about 90%. In a scanning analysis by scanning probe microscopy, this surface morphology has an average length RSm of 1.1 to 1.4 µm and a maximum height roughness Rz of 0.3 to 0.4 µm according to (JIS B 0601:2001(ISO 4287)). Fig. 8 illustrates roughness (surface roughness) curves based on that data. In the profile curves of Fig. 8, the large texture exhibits an irregular period of 2 to 6 µm, which is at variance with the analysis value of RSm=1.4 µm outputted by a computer. This merely indicates that fine irregularities unsuitable for representing the surface roughness at this level were partially included in the calculation.

More accurately, the calculated values in Fig. 8 indicated a roughness period having valleys every 2 to 6 µm. This range appears to correspond to boundaries between grains of the stainless steel, as can be observed in the micrograph of Fig. 6(a). Another piece of the stainless steel plate material was analyzed by XPS. XPS analysis provides information on elements in a shallow section of the surface up to a depth of about 1 nm. The XPS analysis revealed the presence of large amounts of oxygen and iron in the surface, together with small amounts of nickel, chromium, carbon and traces of molybdenum and silicon. These observational results indicate that the main component of the surface of the stainless steel plate material is a metal oxide. The analysis pattern is substantially identical to that of SUS316 prior to the surface treatment, i.e. prior to etching, of the stainless steel plate material.

On the same day, the SUS316 stainless steel pieces were taken out and the ends thereof were thinly coated with a commercially available liquid one-liquid dicyandiamide-cured epoxy adhesive "EP-106 (by Cemedine)". The pieces were placed in a desiccator, with the coated surface facing up, and the desiccator was evacuated to 3 mmHg using a vacuum pump. One minute after evacuation, air was let in to revert the pressure to normal pressure. The operation of reverting to normal pressure after depressurization was repeated three times, and then the stainless steel plate pieces were removed from the desiccator. The faces coated with the adhesive were stacked onto each other, over a bonding surface area therebetween of about 0.5 cm². The bonded pieces were placed in a hot-air dryer at 135°C, where the two stainless steel pieces were heated with a 200 g weight placed thereon. After 40 minutes, the temperature setting of the hot-air dryer was changed to 165°C, to raise the temperature. Once reached, the temperature of 165°C was kept for 20 minutes, after which the hot-air dryer was switched off. The dryer was left to cool with the door open. As a result there was obtained an integrated product of two stainless steel plate pieces bonded to each other, as illustrated in Fig. 4. Two days later, the integrated product was subjected to a tensile fracture test. The shear fracture strength, averaged over four sets, was of 45 MPa. This bonding strength (fixing) was far stronger than expected.

### [Experimental example 2](Stainless steel and adhesive)

Exactly the same experiment as in experimental example 1 was carried out using a 1 mm-thick plate material of stainless steel SUS316, but modifying the immersion time in the aqueous solution of sulfuric acid from 3 minutes to 6 minutes. Otherwise, the procedure was exactly the same as in experimental example 1. A tensile fracture test of the obtained integrated product illustrated in Fig. 4 yielded a shear fracture strength, averaged over four sets, of 56 MPa. That is, the pieces were bonded yet more strongly than in experimental example 1.

### [Experimental example 3](Stainless steel and adhesive)

A 1-mm thick plate material of commercial stainless steel SUS304 was procured, and was cut into 45 mm × 18 mm rectangular pieces. A degreasing aqueous solution was prepared in a dipping bath by heating, to a temperature of 60°C, an aqueous solution containing 7.5% of a commercially available degreasing agent "NE-6 (by Cemedine)" for aluminum alloys. The stainless steel plate material was immersed for 5 minutes in this degreasing agent aqueous solution, followed by thorough rinsing with water. Next, the stainless steel plate material was immersed for 1 minute in another dipping bath of a 1.5% aqueous solution of caustic soda at 40°C, and was rinsed with water thereafter. A 10% aqueous solution of 98% sulfuric acid was prepared next at 65°C. The stainless steel plate pieces were immersed for 3 minutes in the aqueous solution, and were then thoroughly rinsed with deionized water. The pieces were then immersed for 3 minutes in a 3% aqueous solution of nitric acid at 40°C, followed by water rinsing. The pieces were then dried for 15 minutes in a warm-air dryer at 90°C.

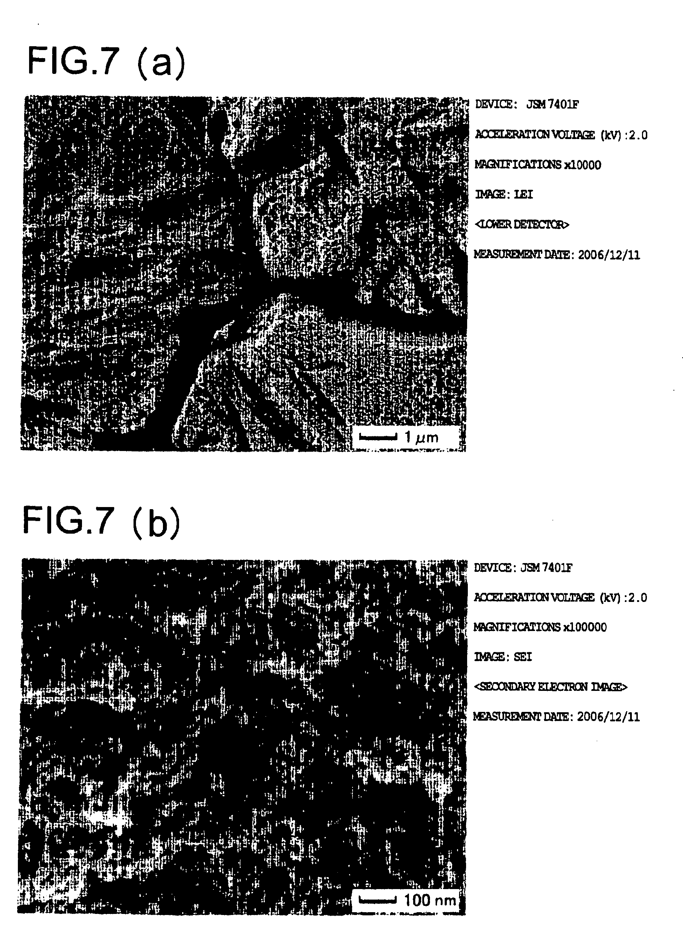

The stainless steel plate materials were all wrapped in aluminum foil and was stored further sealed in a polyethylene bag. Two days later, one of the pieces was observed using an electron microscope. Figs. 7(a), (b) illustrate observation results using an electron microscope at 10,000 and 100,000 magnifications, respectively. The micrograph of Fig. 7(b) shows an entire surface covered with ultra-fine irregularities shaped as stacks of granules and irregular polyhedral bodies having a diameter of 20 to 70 nm, specifically in the form of scree (ordinary mountaineering term) on lava plateau slopes. The straightforward inference from observing the micrographs was that the erosion brought about by the aqueous solution of sulfuric acid starts as fine etching (etching that creates the scree-like surface morphology), and then proceeds into etching that creates the micron-scale irregularities. This explains the fact that fine etching affects only about 90% of the whole surface, and does not progress to the chemical etching that creates the micron scale roughness, in the etching example of Experiment 1 using SUS316.

If chemical etching is assumed not to occur uniformly over the entire surface of the stainless steel but at metal grain boundaries, then the fact that micron-scale etching has already taken place, even with unsatisfactory fine etching, is to be expected. The same is probably true of SUS304. The large ditch-like valleys shown in the micrograph of Fig. 7(a) may be grain boundaries. If the above is correct, then we expect that chemical etching methods must be developed for creating valleys at portions other than grain boundaries, in stainless steels (annealed stainless steels) having a large grain size, i.e. a grain size of 20 to 30 µm or larger.

The XPS analysis revealed the presence of large amounts of oxygen and iron in the surface, together with small amounts of nickel, chromium, carbon and traces of molybdenum and silicon. These observational results indicate that the main component of the surface of the stainless steel is a metal oxide. This analysis pattern by XPS is substantially identical to that of SUS304 prior to etching. Thereafter, two stainless steel pieces were bonded using a one-liquid dicyandiamide-cured epoxy adhesive "EP-106", in exactly the same way as in experimental example 1, to yield the integrated product illustrated in Fig. 4. Two days later, the integrated product was subjected to a tensile fracture test. The shear fracture strength, averaged over four sets, was very high, of 58 MPa.

### [Experimental example 4] (Adhesive)

A commercially available liquid one-liquid dicyandiamide-cured epoxy adhesive "EP-106 (by Cemedine)" was procured. An ethylene-acrylate-maleic anhydride terpolymer "Bondine TX8030(trademark) by Arkema", as a polyolefin resin, was procured, was frozen at liquid-nitrogen temperature, and was mechanically crushed to yield a 30 µm mesh-pass powder. Glass fibers having an average fiber diameter of 9 µm and fiber length of 3 mm "RES03-TP91 (by Nippon Sheet Glass)" were procured and lightly ground in a mortar. A polyethylene beaker was charged with 100 g of the epoxy adhesive "EP-106", 5 g of the above powdered polyolefin resin, and 10 g of the above glass fibers. The whole was thoroughly stirred and left to stand for 1 hour, followed by renewed stirring to elicit thorough blending. The resulting blend was the epoxy adhesive.

In experimental example 4, tests were then performed in exactly the same way as in Experimental example 3, but using herein the obtained adhesive composition instead of "EP-106". Two days after adhesive curing, the bonded pieces were subjected to a tensile fracture test. The shear fracture strength, averaged over four sets, was of 55 MPa.

### [Experimental example 5] (Adhesive)

A commercially available epoxy adhesive "EP-106" was procured. A glycidyl methacrylate-ethylene copolymer "Bond First E (trademark) by Sumitomo Chemical", as a polyolefin resin, was procured, was frozen at liquid-nitrogen temperature, and was mechanically crushed to yield a 30 µm mesh-pass powder. A polyethylene beaker was charged with 100 g of the epoxy adhesive "EP-106", 5 g of the above powdered polyolefin resin, and 10 g of the glass fibers "RES03-TP91". The whole was thoroughly stirred and left to stand for 1 hour, followed by renewed stirring to elicit thorough blending. The resulting blend was the epoxy adhesive.

In experimental example 5, tests were then performed in exactly the same way as in Experimental example 3, but using herein the obtained adhesive instead of "EP-106". Two days after adhesive curing, the bonded pieces were subjected to a tensile fracture test. The shear fracture strength, averaged over four sets, was of 53 MPa. In the light of the present experimental example 5 and experimental examples 3 and 4, it is evident that the magnitude of the basic bonding strength is determined by, for instance, the shape and characteristics of the metal surface. The fact that the results of the present experimental example 5 and experimental examples 3 and 4 were substantially identical suggested that the prerequisite basic performance of the adhesive itself did not change between "EP-106" and the adhesive in the present experimental example 5 or the like. The adhesive in experimental example 5 actually comprised an elastomer. Also, the coefficient of linear expansion of the adhesive was expected to be close to that of metals, on account of the filler that was blended in.
Therefore, conventional knowledge among practitioners at the forefront of adhesive science suggested that good results were to be expected upon exposure to vibration and high temperature.

### [Experimental example 6] (Preparation of commercial-type prepreg)

**[Table 1]**

| Thermosetting resin for prepreg | | |
|---|---|---|
| Resin fraction | | Proportion (parts by mass) |
| Epoxy resin | - Brominated bisphenol A solid epoxy resin "EPC-152 by Dainippon Ink & Chemicals)" | 10.0 |
| | - Bisphenol A liquid epoxy resin "EP-828 (by Yuka-Shell Epoxy)" | 13.9 |
| | - Bisphenol F liquid epoxy resin "EPC-830 (by Dainippon Ink & Chemicals)" | 24.8 |
| Elastomer | - Weakly crosslinked carboxyl-terminated solid acrylonitrile butadiene rubber "DN-611 (by Zeon Corporation)" | 8.0 |
| | - Thermoplastic hydroxyl-terminated polyether sulfone "PES-100P (by Mitsui Toatsu Chemicals)" | 3.0 |
| Curing agent | | |
| - Tetraglycidyldiaminodiphenylmethane "ELM-434 (by Sumitomo Chemical)" | 15.0 | |
| - 4,4'-diaminodiphenyl sulfone "4,4'-DDS (by Sumitomo Chemical)" | 25.0 | |
| - BF₃-monoethylamine complex "BF3·MEA" | 0.3 | |
| Total | 100.0 | |

The obtained resin film was set in a prepreg machine, and was pressure-bonded from both sides of unidirectionally aligned carbon fibers "T-300 (by Toray)", as reinforcing fibers, under application of pressure in accordance with known methods, to prepare a prepreg having a resin content adjusted to 38% and a fiber areal weight of 190 g/m². The prepreg was manufactured in accordance with a method in related patents. Prepregs marketed by various vendors in Japan are presumably manufactured in accordance with a similar method.

### [Experimental example 7] (Production and evaluation of a composite)

A 1.0 mm-thick SUS304 stainless steel plate material was cut into rectangular 45 mm × 15 mm pieces. In the present experimental example 7 the pieces were subjected to a liquid treatment in exactly the same way as in experimental example 3. That is, the pieces were degreased in an aqueous solution of the degreasing agent "NE-6" for aluminum alloys, and were then rinsed with water. Next, the pieces were subjected to a preliminary treatment with a basic aqueous solution by being immersed for 1 minute in a 1.5% aqueous solution of caustic soda at 40°C, followed by water rinsing. The pieces were immersed next for 3 minutes in a 10% aqueous solution of 98% sulfuric acid, at 65°C, followed by water rinsing. The pieces were then immersed for 3 minutes in a 3% aqueous solution of nitric acid, followed by water rinsing. The pieces were dried for 15 minutes in a warm-air dryer at a temperature of 90°C. After drying, the stainless steel pieces were wrapped in aluminum foil and were stored. On the same day, the stainless steel pieces were taken out and the ends thereof were thinly coated with a liquid one-liquid dicyandiamide-cured epoxy adhesive "EP-106 (by Cemedine)". The pieces were placed in a desiccator, with the coated surface facing up, and the desiccator was evacuated to 3 mmHg using a vacuum pump. One minute after evacuation, air was let in to revert the pressure to normal pressure. The operation of reverting to normal pressure after depressurization was repeated three times, and then the stainless steel plate pieces were removed from the desiccator.

Fig. 1 is a cross-sectional diagram of a baking jig for baking and bonding a stainless steel plate piece and an FRP. Fig. 2 is an external view diagram illustrating an integrated stainless steel composite 10 of a stainless steel plate piece and a CFRP, produced through baking of a stainless steel plate piece 11 and a CFRP 12 in the baking jig 1. The baking jig 1 is a fixing jig used during baking of the prepreg and the stainless steel plate piece 11. A rectangular mold recess 3 is opened on the top face of a mold body 2. A mold through-hole 4 is formed in the bottom of the mold body 2.

A bottom plate projection 6 of a mold bottom plate 5 is inserted into the mold through-hole 4. The bottom plate projection 6 projects out of a mold bottom plate 7 of the mold body 2. The bottom face of the mold body 2 rests on a mold seat 8. With the mold bottom plate 5 inserted in the mold recess 3 of the mold body 2, a stainless steel composite 10 is manufactured through baking of the stainless steel plate piece 11 and the CFRP 12, which are fixed to each other as illustrated in Fig. 2, in the baking jig 1. The stainless steel composite 10 is manufactured in accordance with the procedure outlined below. Firstly, a demolding film 17 is laid to cover the entire surface of the mold bottom plate 5. Next, the stainless steel plate piece 11 and a plate-like PTFE spacer 16 are placed on the demolding film 17. Then, 3 plies of weaved cloth-like carbon fibers (T-300 by Toray) cut to a desired size, are laid on the end of the stainless steel plate piece 11 and on the PTFE spacer 16 made of PTFE (polytetrafluoroethylene resin). A volume of about 1 cc of an uncured epoxy adhesive (EP-106) is discharged out of a syringe onto the carbon fiber cloth, to impregnate the latter and produce thereby the uncured CFRP prepreg.

After layering the prepreg, a demolding film 13, which is a polyethylene film for demolding, is further laid on the stainless steel plate piece 11 and the prepreg. Then PTFE blocks 14, 15 made of PTFE, as weights, are placed on the demolding film 13. A weight (not shown) of several hundred g is further placed, as the case may require, on the PTFE blocks 14, 15. The whole is then placed, in this state, in a baking oven, where the prepreg is cured. After cooling, the weights, the seat 8 and so forth are removed, and the lower end of the bottom plate projection 6 is pushed against the floor, to remove the stainless steel composite 10 (Fig. 2) obtained through bonding of the stainless steel plate piece 11 and the CFRP, along with the demolding films 13, 17. The PTFE spacer 16 and the demolding films 17, 13 are non-adhesive materials, and can thus be easily stripped off the CFRP.

The demolding film 17 used in the present embodiment was a 0.05 mm-thick polyethylene film cut into strips. Three plies of weaved cloth of carbon fibers "T-300 (by Toray)", cut separately were overlaid while being coated with an epoxy adhesive "EP-106" discharged out of a syringe. Then, 0.5 kg iron weights were further placed on the PTFE blocks 14, 15, respectively. The dryer was energized to raise the temperature to 135°C. Heating proceeded at a temperature of 135°C for 40 minutes. After a break of 5 minutes, the temperature was raised to 165°C, and was held there for 20 minutes. The dryer was then powered off and was left to cool with the door closed.

On the next day, the baking jig 1 was removed from the dryer and the molded product was demolded from the baking jig 1. The polyethylene films were stripped off to yield the stainless steel composite 10 illustrated in Fig. 2. The same operation was repeated to obtain eight integrated products in the form of a stainless steel composite 10. On the second day after bonding, four composites were subjected to a tensile fracture test. The CFRP portion was sandwiched between two pieces of sandpaper-roughened 1 mm-thick SUS304 stainless steel pieces. The resulting stack was clamped and fixed in a gripping chuck. The shear fracture strength, averaged over four sets, was 58 MPa, greater than anticipated. The bonding surface area was calculated as 1 × m, as in Fig. 2. The remaining four pieces of stainless steel composite 10 were clamped in the tensile tester in the same way as above, and were loaded up to about 30 MPa, whereupon pulling was discontinued. The pieces were left in the tester for 10 minutes. Thereafter, the gripping chuck was loosened and the pieces were removed from the tester. On the next day, the pieces were subjected again to a tensile fracture test that yielded an average result of 59 MPa, i.e. no particular drop in bonding strength was observed.

### [Experimental example 8] (Production and evaluation of a composite)

In experimental example 8, a 1 mm-thick SUS304 stainless steel plate material identical to that of experimental example 7 was cut into 45 mm × 15 mm test pieces for bonding strength measurement. That is, an adhesive was coated onto the stainless steel pieces, and these were placed in a desiccator in which a same cycle operation was repeated three times, the cycle involving evacuating the desiccator using a vacuum pump and reverting again to normal pressure (atmospheric pressure), to prepare adhesive-coated stainless steel pieces. Three baking jigs 1, 2 and 3 illustrated in Fig. 1 were prepared next. A 0.05 mm-thick polyethylene film cut into strips was laid in the baking jigs 1, 2 and 3, and then stainless steel pieces 11 of Fig. 1 were placed in the jigs. The procedure thus far was identical to that of experimental example 7, except that the CFRP prepreg was the CFRP prepreg prepared in experimental example 6.

That is, three plies of the cut prepreg of experimental example 6 were overlaid, and then the polyethylene film 13 was placed on top of the prepreg. PTFE blocks 14, 15 were placed, and then the whole was moved into a hot-air dryer. In the hot-air dryer, 0.5 kg iron weights were further placed on the blocks 14, 15, respectively. The dryer was energized to raise the temperature to 135°C. Heating proceeded at a temperature of 135°C for 60 minutes. After a break of 10 minutes, the temperature was raised to 170°C, and was held there for 40 minutes. The dryer was then powered off and was left to cool with the door closed. On the next day, the baking jig 1 was removed from the dryer and the molded product was demolded from the baking jig 1. The polyethylene films were stripped off to yield the molded stainless steel composite 10 illustrated in Fig. 2. Two days after bonding, the stainless steel composite 10 was subjected to a tensile fracture test. The CFRP portion was sandwiched between two pieces of sandpaper-roughened 1 mm-thick SUS304 stainless steel pieces. The resulting stack was clamped and fixed in a gripping chuck. The shear fracture strength, averaged over four sets, was 55 MPa, far stronger than anticipated. The bonding surface area was calculated as l × m, as in Fig. 2.

### [Experimental example 9](Stainless steel: oxidation step)

In the present experimental example 9, the same 1 mm-thick × 45 mm × 18 mm rectangular pieces of stainless steel SUS304 of experimental example 3 were used. A degreasing aqueous solution was prepared in a dipping bath by heating, to a temperature of 60°C, an aqueous solution containing 7.5% of a commercially available degreasing agent "NE-6 (by Cemedine)" for aluminum alloys. The stainless steel plate material was immersed for 5 minutes in this degreasing agent aqueous solution, followed by thorough rinsing with water. Next, the stainless steel plate material was immersed for 1 minute in another dipping bath of a 1.5% aqueous solution of caustic soda at 40°C, and was rinsed with water thereafter. An aqueous solution containing 5% of 98% sulfuric acid and 1% of ammonium bifluoride, at 65°C, was prepared next. The stainless steel pieces were immersed for 4 minutes in the aqueous solution, and were then rinsed with deionized water. Next, the pieces were immersed for 1 minute in another dipping bath of an aqueous solution containing 10% of caustic soda, and 5% of sodium hypochlorite, at 65°C, and were rinsed with water thereafter. The pieces were dried for 15 minutes in a warm-air dryer at a temperature of 90°C. Thereafter, two stainless steel pieces were bonded using a one-liquid dicyandiamide-cured epoxy adhesive "EP-106", in exactly the same way as in experimental example 1, to yield the integrated product illustrated in Fig. 4. Two days later, the bonded pieces were subjected to a tensile fracture test. The shear fracture strength, averaged over four sets, was of 55 MPa, far stronger than expected.

### [Experimental example 10](Stainless steel: comparative example)

In the present experimental example 10, the same 1 mm-thick × 45 mm × 18 mm rectangular pieces of stainless steel SUS304 of experimental example 3 were used. A degreasing aqueous solution was prepared in a dipping bath by heating, at a temperature of 60°C, an aqueous solution containing 7.5% of a commercially available degreasing agent "NE-6 (by Cemedine)" for aluminum alloys. The stainless steel plate material was immersed for 5 minutes in this degreasing agent aqueous solution, followed by thorough rinsing with water. Next, the stainless steel plate material was immersed for 1 minute in another dipping bath of a 1.5% aqueous solution of caustic soda at 40°C, and was rinsed with water thereafter. A 10% aqueous solution of 98% sulfuric acid, at 65°C, was prepared next. The stainless steel pieces were immersed for 0.5 minutes in the aqueous solution, and were then rinsed with deionized water. The pieces were then immersed for 3 minutes in a 3% aqueous solution of nitric acid at 40°C, followed by water rinsing. The pieces were then dried for 15 minutes in a warm-air dryer at 90°C.

After drying, the stainless steel plate material was wrapped in aluminum foil and was stored further sealed in a polyethylene bag. One of the stainless steel plate material pieces was scanned 6 times using a scanning probe microscope. The results revealed an average length RSm (JISB0601:2001(ISO 4287)) of 14.3 to 17.5 µm, and a maximum height roughness Rz of 0.3 to 0.7 µm. The average length RSm was 10 µm or greater, and hence far larger than.the micron scale deemed optimal by the inventors. The height roughness Rz was small in relation to the period. Thereafter, two stainless steel pieces 32, 33 were bonded using a one-liquid dicyandiamide-cured epoxy adhesive "EP-106", in exactly the same way as in experimental example 1, to yield the integrated product illustrated in Fig. 4. Two days later, the integrated product was subjected to a tensile fracture test. The shear fracture strength, averaged over four sets, was 35 MPa. The bonding strength was substantially lower than that of experimental example 3.

### [Experimental example 11](Stainless steel: comparative example)

In the present experimental example 11, the same 1 mm-thick × 45 mm × 18 mm rectangular pieces of stainless steel SUS304 of experimental example 3 were used. A degreasing aqueous solution was prepared in a dipping bath by heating, to a temperature of 60°C, an aqueous solution containing 7.5% of a commercially available degreasing agent "NE-6 (by Cemedine)" for aluminum alloys. The stainless steel plate material was immersed for 5 minutes in this degreasing agent aqueous solution, followed by thorough rinsing with water. Next, the stainless steel plate material was immersed for 1 minute in another dipping bath of a 1.5% aqueous solution of caustic soda at 40°C, and was rinsed with water thereafter. An aqueous solution containing 10% of 98% sulfuric acid and 1% of ammonium bifluoride, at 65°C, was prepared next. The stainless steel pieces were immersed for 15 minutes in the aqueous solution, and were then rinsed with deionized water. The pieces were then immersed for 3 minutes in a 3% aqueous solution of nitric acid at 40°C, followed by water rinsing. The pieces were then dried for 15 minutes in a warm-air dryer at 90°C.

The stainless steel plate material was wrapped in aluminum foil and was stored further sealed in a polyethylene bag. One of the stainless steel plate material pieces was scanned 6 times using a scanning probe microscope. The results revealed an average length RSm (JISB0601:2001(ISO 4287)) of 3.9 to 4.4 µm, and a maximum height roughness Rz of 4.2 to 5.2 µm. The value of maximum height roughness Rz of the stainless steel piece lay ambiguously at the boundary of the micron-scale roughness according to the inventors. Micron-scale roughness (surface roughness) entails herein a maximum height roughness (Rz) of 0.8 to 10 µm and an average length (RSm) of 0.2 to 5 µm, but at the same time we believe it preferable for the maximum height roughness Rz to be about half the average length RSm. Such being the case, the preferred maximum height roughness Rz of the stainless steel pieces of experimental example 11 ranges from 0.2 to 2 µm, since the average length RSm is of about 4 µm. In a comparison with valleys in nature, the measured value of the maximum height roughness Rz ranging from 4.2 to 5.7 µm can be thought of as an excessively deep valley (excessively sheer gorge).

Two stainless steel pieces 32, 33 were bonded using a one-liquid dicyandiamide-cured epoxy adhesive "EP-106", in exactly the same way as in experimental example 1, to yield the integrated product illustrated in Fig. 4. Two days later, the bonded pieces were subjected to a tensile fracture test. The shear fracture strength, averaged over four sets, was of 38 MPa. The bonding strength was fairly lower than that of experimental example 3. Bonding strength becomes weaker when the above-described gorges are too sheer. Probably, recesses in the form of horizontal holes are also formed, so that the resulting complex shapes cannot be measured by actual scanning probe microscopy. The above result indicates that the adhesive cannot penetrate then to the deepest portions of the recesses, and/or that the metal surface layer itself has become weakened.

## Claims

1. A stainless steel composite, comprising:
a first metal part being a part which is made of stainless steel and has micron-scale roughness produced by chemical etching, and substantially the entire surface of which is covered with, under electron microscopy, ultra-fine irregularities in the form of scree on a lava plateau slope in which granules or irregular polyhedral bodies having a diameter of 20 to 70 nm are stacked, said ultra-fine irregularities being a thin layer of a metal oxide; and
another adherend that is bonded using, as an adhesive, an epoxy adhesive (1) that penetrates into said ultra-fine irregularities.

2. The stainless steel composite according to claim 1,
wherein said adherend is a second metal part made of stainless steel having said ultra-fine irregularities formed thereon.

3. The stainless steel composite according to claim 1 or 2,
wherein said adherend is a fiber-reinforced plastic, comprising said epoxy adhesive, and reinforced through filling and laminating of one or more types selected from among long fibers, short fibers and fiber cloth.

4. The stainless steel composite according to any one of claims 1 to 3,
wherein said micron-scale surface roughness has an average length (RSm) of 0.8 to 10 µm and a maximum height roughness (Rz) of 0.2 to 5 µm.

5. The stainless steel composite according to any one of claims 1 to 4,
wherein said chemical etching involves immersion in an aqueous solution of a non-oxidizing strong acid.

6. The stainless steel composite according to claim 5,
wherein said aqueous solution of a non-oxidizing strong acid is an aqueous solution of sulfuric acid.

7. The stainless steel composite according to any one of claims 1 to 6,
wherein a resin of a cured product (1) of said epoxy adhesive contains no more than 30 parts by mass of an elastomer component relative to a total 100 parts by mass of resin fraction.

8. The stainless steel composite according to any one of claims 1 to 6,
wherein a cured product (1) of said epoxy adhesive contains a total of no more than 100 parts by mass of a filler relative to a total 100 parts by mass of resin fraction.

9. The stainless steel composite according to claim 8,
wherein said filler is one or more types of reinforcing fiber selected from among glass fibers, carbon fibers and aramid fibers, or
one or more types of powder filler selected from among calcium carbonate, magnesium carbonate, silica, talc, clay and glass.

10. The stainless steel composite according to claim 7,
wherein said elastomer component has a particle size of 1 to 15 µm, and is one or more types selected from among vulcanized rubber powder, semi-crosslinked rubber, unvulcanized rubber, a terminal-modified thermoplastic resin of a hydroxyl group-terminated polyether sulfone having a melting point/softening point not lower than 300°C, and a polyolefin resin.

11. A method for manufacturing a stainless steel composite, comprising:
a machining.step of mechanically shaping a stainless steel part from a casting or an intermediate material;
a chemical etching step of immersing said shaped stainless steel part in an aqueous solution of sulfuric acid;
a coating step of coating an epoxy adhesive onto required portions of said stainless steel part;
a cutting step of cutting a prepreg material of fiber-reinforced plastic to the required size;
an affixing step of affixing said prepreg material to the coated surface of said stainless steel part; and
a curing step of curing the entire epoxy resin fraction in said epoxy adhesive by positioning, pressing and heating said prepreg material and said stainless steel part.

12. A method for manufacturing a stainless steel composite, comprising:
a machining step of mechanically shaping a stainless steel part from a casting or an intermediate material;
a chemical etching step of immersing said shaped stainless steel part in an aqueous solution of sulfuric acid;
a coating step of coating an epoxy adhesive onto required portions of said stainless steel part;
a curing pre-treatment step of placing said stainless steel part, having been coated with said epoxy adhesive, in an airtight vessel, depressurizing the vessel, and then pressurizing the vessel to thereby push said epoxy adhesive into fine recesses on the surface of said stainless steel part;
a cutting step of cutting a prepreg material of fiber-reinforced plastic to the required size;
an affixing step of affixing said prepreg material to the coated surface of said stainless steel part; and
a curing step of curing the entire epoxy resin fraction in said epoxy adhesive by positioning, pressing and heating said prepreg material and said stainless steel part.
